# EUROPÄISCHE PATENTSCHRIFT

(11) **EP 2 607 715 B1**
(45) Veröffentlichungstag und Bekanntmachung des Hinweises auf die Patenterteilung: **29.03.2017**
(21) Anmeldenummer: 11195077.0
(22) Anmeldetag: 22.12.2011
(51) Int. Cl.: F04D 29/52, F01D 11/12, F01D 25/24, F04D 29/68, F04D 29/16

(54) **Gehäuse für einen beschaufelten Rotor einer Strömungsmaschine**
Housing for a bladed rotor of a flow engine
Boîtier pour un rotor à aubage d'une turbomachine

(43) Veröffentlichungstag der Anmeldung: 26.06.2013
(73) Patentinhaber: MTU Aero Engines AG, 80995 München (DE)
(72) Erfinder: Stiehler, Frank, 04924 Bad Liebenwerda (DE); Schellhorn, Lars, 07318 Saalfeld (DE); Dr. Werner, Andre, 80639 München (DE)

(56) Entgegenhaltungen:
- EP-A1- 1 286 022
- EP-A2- 1 382 799
- EP-A2- 1 832 755
- EP-A2- 2 034 132
- EP-A2- 2 050 931
- EP-A2- 2 196 632
- GB-A- 2 477 745

## Beschreibung

Die Erfindung betrifft ein Gehäuse der im Oberbegriff des Patentanspruchs 1 angegebenen Art für einen beschaufelten Rotor einer Strömungsmaschine sowie eine Strömungsmaschine.

Ein derartiges Gehäuse ist beispielsweise bereits aus der DE 699 09 120 T2 bekannt und umfasst an seiner einem beschaufelten Rotor zuzuwendenden Innenseite eine strukturierte Oberfläche mit einer Mehrzahl von über den Innenumfang des Gehäuses angeordneten Vertiefungen. Die derart strukturierte Oberfläche, welche auch als "casing treatment" bezeichnet wird, dient dabei zur Verbesserung eines Pumpgrenzbereichs einer zugeordneten Strömungsmaschine und beeinflusst während des Betriebs der Strömungsmaschine die Strömungsverhältnisse im Bereich der Rotorschaufelspitzen.

Aus der EP 1 832 755 A2 ist ein Gehäuse eines Verdichters einer Gasturbinenmaschine mit einer ein "casing treatment" aufweisenden Gehäusewand und einem Rotor mit einer Laufschaufel ohne Deckscheibe bekannt.

Aus der EP 1 286 022 A1 ist eine Anordnung für einen Verdichter einer Gasturbinenmaschine bekannt, wobei der Verdichter ein Gehäuse und einen Rotor mit mehreren axialen Laufschaufeln aufweist.

Aus der EP 2 196 632 A2 ist eine Dichtung zwischen zwei relativ zueinander beweglichen Bauteilen bekannt, wobei die Dichtung eine abreibfähige Struktur auf wenigstens einem der Bauteile aufweist.

Aus der GB 2477745 A ist ein Gehäuse für ein rotierendes Bauteil bekannt, wobei das Gehäuse ringförmig ist und eine innere Oberfläche aufweist.

Moderne Rotoren sind häufig integral beschaufelt und als sogenannte Blisk (Blade Integrated Disk) oder Bling (Blade Integrated Ring) ausgebildet. In Abhängigkeit der jeweiligen Betriebsbedingungen der Strömungsmaschine kann es unter bestimmten Umständen zu einem Anstreifen der Rotorschaufeln am casing treatment kommen. Wenn die Rotorschaufeln und/oder die strukturierte Oberfläche aus Titan oder einer Titanlegierung gefertigt sind, kann es beim Anstreifen zur Entstehung von Titanfeuern kommen. Weiterhin besteht beim Anstreifen die Gefahr einer Beschädigung des Gehäuses und/oder des Rotors. Hierdurch kommt es zu einem erhöhten Wartungs- und Reparaturaufwand mit entsprechend erhöhten Betriebskosten.

Um ein Anlaufen oder Anstreifen zu vermeiden, ist es bekannt, die die Vertiefungen voneinander abtrennenden Erhebungen, welche auch als casing treatment- bzw. CT-Zähne bezeichnet werden, stark zurückzuschneiden. Dies führt jedoch zu einer Verschlechterung des aerodynamischen Wirkungsgrads und damit zu einem erhöhten Kraftstoffbedarf der zugeordneten Strömungsmaschine.

Aufgabe der vorliegenden Erfindung ist es, ein Gehäuse der eingangs genannten Art für einen beschaufelten Rotor einer Strömungsmaschine bereitzustellen, welches bei geringeren Wartungs- und Reparaturkosten eine Verbesserung des Pumpgrenzbereichs der Strömungsmaschine ermöglicht. Eine weitere Aufgabe der Erfindung besteht in der Bereitstellung einer Strömungsmaschine mit einem derartigen Gehäuse.

Die Aufgaben werden erfindungsgemäß durch ein Gehäuse mit den Merkmalen des Patentanspruchs 1 sowie durch eine Strömungsmaschine mit den Merkmalen des Patentanspruchs 8 gelöst. Vorteilhafte Ausgestaltungen mit zweckmäßigen Weiterbildungen der Erfindung sind in den jeweiligen Unteransprüchen angegeben.

Bei einem erfindungsgemäßen Gehäuse ist es vorgesehen, dass die Vertiefungen durch Erhebungen voneinander abgetrennt sind, wobei die Erhebungen aus einem ersten Werkstoff bestehen, und der erste Werkstoff Titan und/oder eine Titanlegierung ist. Die Erhebungen sind zumindest teilweise mit einem abreibfähigeren zweiten Werkstoff überdeckt. Ferner sind die Erhebungen in Umfangsrichtung des Gehäuses derart angeordnet, dass bei einem Anstreifen einer Rotorschaufel ein unterbrochener Abrieb von Erhebung zu Erhebung erfolgt. Mit anderen Worten ist es erfindungsgemäß vorgesehen, dass anstreifgefährdete Geometriebereiche des Gehäuses aus einem im Vergleich zum ersten Werkstoff des Gehäuses abriebfähigeren zweiten Werkstoff hergestellt sind. Indem die auch als CT-Zähne bezeichneten Erhebungen zumindest teilweise mit dem abreibfähigeren zweiten Werkstoff überdeckt sind, müssen die Erhebungen im Unterschied zum Stand der Technik nicht so weit wie möglich zurückgeschnitten, sondern können aerodynamisch optimal mit geringstmöglichen Spaltmaßen ausgelegt werden. Hierdurch ist eine Verbesserung des Pumpgrenzbereichs der zugeordneten Strömungsmaschine ermöglicht, ohne dass Kompromisse im Hinblick auf den aerodynamischen Wirkungsgrad erforderlich sind. Weiterhin wird mit Hilfe des abreibfähigeren zweiten Werkstoffs die Gefahr einer Beschädigung des Rotors bzw. der Rotorschaufelspitzen im Fall eines Anlaufens oder Anstreifens an den Erhebungen verringert, wodurch der Wartungs- und Reparaturaufwand der zugeordneten Strömungsmaschine insgesamt erheblich gesenkt werden kann. Mit anderen Worten bildet der zweite Werkstoff einen Abreibbelag der Erhebungen oder CT-Zähne, so dass ein Anlaufen oder Anstreifen von Rotorschaufelspitzen lediglich zu einem unproblematischen Abrieb des zweiten Werkstoffs führt. Eine Reparatur dieses abgeriebenen Bereichs ist vergleichsweise schnell, einfach und
kostengünstig zu bewerkstelligen. Darüber hinaus wird mit Hilfe des erfindungsgemäßen Gehäuses die Entstehung von Titanfeuern zuverlässig verhindert. Hierdurch können größere Teile des Gehäuses aus Titan oder einer Titanlegierung gefertigt werden, wodurch das Gewicht des Gehäuses vorteilhaft verringert wird und die zugeordnete Strömungsmaschine bei höheren Temperaturen und/oder mit höheren Drücken betrieben werden kann. Dies ermöglicht eine weitere Verbesserung des Wirkungsgrads der Strömungsmaschine und erlaubt zusätzliche Treibstoffeinsparungen. Das Gehäuse kann grundsätzlich einteilig, mehrteilig und/oder segmentiert ausgebildet sein.

In einer vorteilhaften Ausgestaltung der Erfindung ist vorgesehen, dass die Erhebungen zumindest im Bereich ihres geringsten Abstands zu Schaufelspitzen des Rotors mit dem zweiten Werkstoff überdeckt sind. Hierdurch ist vorteilhaft sichergestellt, dass die den Rotorschaufelspitzen naheliegendsten und damit anstreifgefährdetsten Geometriebereiche des Gehäuses aus dem abriebfähigeren zweiten Werkstoff hergestellt sind bzw. bestehen.

Weitere Vorteile ergeben sich, indem die Vertiefungen und Erhebungen in einem Trägerteil ausgebildet sind, welches am Gehäuse festgelegt ist. Hierdurch kann das Gehäuse vorteilhaft modular ausgebildet sein, so dass optimal an den jeweiligen Einsatzzweck angepasste Trägerteile, in denen die CT-Zähne ausgebildet sind, bereitgestellt und am Gehäuse festgelegt werden können. Weiterhin werden hierdurch auch die Montage sowie die Reparatur und Wartung des Gehäuses vereinfacht, da das Trägerteil im Fall einer Beschädigung einfach vom Gehäuse abnehmbar und außerhalb des Gehäuses reparierbar bzw. gegen ein neues Trägerteil austauschbar ist.

In einer weiteren vorteilhaften Ausgestaltung der Erfindung ist vorgesehen, dass die Erhebungen im Übergangsbereich zwischen dem ersten Werkstoff und dem zweiten Werkstoff einen stetigen Außenkonturverlauf aufweisen. Mit anderen Worten schließt der zweite Werkstoff bündig und ohne Kanten oder Absätze an den ersten Werkstoff an, so dass sich eine stetige Außenkontur mit entsprechend guten aerodynamischen Eigenschaften ergibt. Besonders bevorzugt ist es dabei, wenn der zweite Werkstoff einen Körper bildet, welcher korrespondierend zu seiner jeweils zugeordneten Erhebung ausgebildet ist und die Erhebung derart ergänzt, dass eine gewünschte 3D-Geometrie gebildet wird.

Eine für viele Anwendungen besonders vorteilhafte Materialpaarung wird in weiterer Ausgestaltung der Erfindung dadurch erreicht, dass der zweite Werkstoff ein Metall und/oder eine Metalllegierung und/oder ein keramisches Material ist. Insbesondere ist der erste Werkstoff eine hochtemperaturfeste Metalllegierung mit einem möglichst geringen spezifischen Gewicht. Als zweiter Werkstoff eignen sich grundsätzlich alle Materialien, die auch für abrasive Einlaufbeläge von Triebwerken Verwendung finden, beispielsweise keramische Materialien wie Aluminium- oder Zirkonoxid.

Weitere Vorteile ergeben sich, wenn der zweite Werkstoff mit Hilfe eines Beschichtungsverfahrens, insbesondere durch thermisches Spritzen, Pulverbeschichten, Auftraglöten, Plasma-Pulver-Auftragschweißen, Auftragschweißen, Wirbelsintem und/oder Sputtern, auf die jeweilige Erhebung aufgebracht ist und/oder dass Körper aus dem zweiten Werkstoff mit jeweiligen Erhebung verbunden sind. Hierdurch kann der abreibfähigere zweite Werkstoff besonders flexibel auf die betreffende Erhebung aufgebracht werden. Wenn der zweite Werkstoff mit Hilfe eines Beschichtungsverfahrens auf die Erhebung aufgebracht werden soll, hat es sich zudem als vorteilhaft gezeigt, wenn die Erhebung bereits eine endkonturnahe Geometrie aufweist. Zur Herstellung des Körpers aus dem zweiten Werkstoff eignen sich beispielsweise Urformverfahren wie Gießen, Sintern oder generative Verfahren. Alternativ oder zusätzlich kann der Körper auch durch ein Trennverfahren wie beispielsweise Fräsen hergestellt sein.

In einer weiteren vorteilhaften Ausgestaltung der Erfindung ist vorgesehen, dass wenigstens eine Erhebung eine Stützwand aufweist, auf welcher der zweite Werkstoff derart aufgebracht ist, dass er wenigstens drei Seiten der Stützwand überdeckt. Mit anderen Worten ist eine Art Nut-Feder-Verbindung zwischen der Erhebung und einem durch den zweiten Werkstoff gebildeten Körper vorgesehen, bei welcher der durch den zweiten Werkstoff gebildete Körper eine Nut aufweist, in die als verbindendes Bauteil die Stützwand der Erhebung eingesteckt wird bzw. ist. Umgekehrt kann grundsätzlich natürlich auch vorgesehen sein, dass der Körper die Stützwand und die Erhebung eine korrespondierende Nut aufweist. Die Verbindung zwischen der Erhebung und dem Körper aus dem zweiten Werkstoff kann grundsätzlich formschlüssig und/oder stoffschlüssig ausgeführt sein. Der Körper aus dem zweiten Werkstoff kann hierzu beispielsweise separat hergestellt und anschließend mit der Erhebung verbunden werden. Alternativ oder zusätzlich kann vorgesehen sein, dass die Stützwand der Erhebung mit dem zweiten Werkstoff beschichtet, beispielsweise umspritzt wird.

Beschrieben wird ebenfalls ein Verfahren zum Herstellen eines Trägerteils, welches zur Verbesserung eines Pumpgrenzbereichs einer Strömungsmaschine im Bereich eines beschaufelten Rotors an einer Innenseite eines erfindungsgemäßen Gehäuses der Strömungsmaschine festlegbar ist. Dieses Verfahren ist nicht Teil der vorliegenden Erfindung. Es sieht vor, dass ein Trägerteilgrundkörper aus einem ersten Werkstoff bereitgestellt und teilweise mit einem abreibfähigeren zweiten Werkstoff überdeckt wird, wobei Vertiefungen und Erhebungen in dem Trägerteil ausgebildet sind und das Trägerteil an dem Gehäuse festgelegt ist. Mit anderen Worten ist es vorgesehen, einen halbzeugartigen Trägerteilgrundkörper aus dem ersten Werkstoff bereitzustellen und teilweise mit einem abreibfähigeren zweiten Werkstoff zu überdecken, wodurch ein Trägerteil erhalten wird, welches an einer einem Rotor zuzuwendenden Innenseite eines Gehäuses einer Strömungsmaschine festlegbar ist. Die sich hieraus ergebenden Vorteile sind den vorhergehenden Beschreibungen zu entnehmen. Darüber hinaus erlaubt das hergestellte Trägerteil einerseits eine modulare Ausgestaltung des Gehäuses und erleichtert andererseits die Montage sowie die Wartung und Reparatur eines zugeordneten Gehäuses bzw. einer zugeordneten Strömungsmaschine. Das Trägerteil kann beispielsweise ringförmig oder ringsegmentförmig ausgebildet sein.

Weitere Vorteile ergeben sich, indem mittels eines Trennverfahrens, insbesondere mittels Fräsen und/oder Schleifen, über den Innenumfang des Trägerteils angeordnete Vertiefungen derart in das Trägerteil eingebracht werden, dass die Vertiefungen voneinander abtrennende Erhebungen des Trägerteils zumindest teilweise mit dem abreibfähigeren zweiten Werkstoff überdeckt bleiben. Dies erlaubt eine besonders schnelle und präzise Ausbildung einer gewünschten Außenkontur des Trägerteils.

Alternativ oder zusätzlich ist es vorgesehen, dass zum Überdecken des Trägerteilgrundkörpers Körper aus dem zweiten Werkstoff hergestellt und mit jeweiligen Erhebungen des Trägerteilgrundkörpers verbunden werden, wobei die Erhebungen über den Innenumfang des Trägerteilgrundkörpers angeordnete Vertiefungen voneinander abtrennen. Hierdurch können die Körper aus dem zweiten Werkstoff als eine Art Kappe oder Krone verwendet und besonders einfach am Trägerteil montiert werden. Entsprechend schnell und einfach können die Körper im Fall einer Beschädigung wieder vom Trägerteil entfernt und repariert oder durch unbeschädigte Körper ersetzt werden.

Ein weiterer Aspekt der Erfindung betrifft eine Strömungsmaschine, insbesondere eine Flugzeugturbine, mit einem Gehäuse, welches einen beschaufelten Rotor umgibt, wobei das Gehäuse zur Verbesserung eines Pumpgrenzbereichs der Strömungsmaschine an seiner dem Rotor zuzuwendenden Innenseite eine strukturierte Oberfläche mit einer Mehrzahl von über den Innenumfang der Innenwand angeordneten Vertiefungen aufweist. Eine Verbesserung des Pumpgrenzbereichs der Strömungsmaschine bei gleichzeitig geringeren Wartungs- und Reparaturkosten ist erfindungsgemäß dadurch ermöglicht, dass das Gehäuse gemäß einem der vorhergehenden Ausführungsbeispiele ausgebildet ist. Die sich hieraus ergebenden Vorteile sind den vorhergehenden Beschreibungen zu entnehmen und gelten entsprechende für die erfindungsgemäße Strömungsmaschine.

Weitere Merkmale der Erfindung ergeben sich aus den Ansprüchen, den Ausführungsbeispielen sowie anhand der Zeichnungen.

Dabei zeigt:
- Fig. 1: eine schematische Perspektivansicht eines Trägerteilgrundkörpers aus einem ersten Werkstoff;
- Fig.. 2: eine schematische Perspektivansicht eines Trägerteils, bei welchem der in Fig. 1 gezeigte Trägerteilgrundkörper teilweise mit einem abreibfähigeren zweiten Werkstoff überdeckt ist;
- Fig. 3: eine schematische Perspektivansicht des in Fig. 2 gezeigten Trägerteils, in welches mittels eines Trennverfahrens Vertiefungen eingebracht sind;
- Fig. 4: ein Drahtgittermodell des Trägerteils gemäß einem weiteren Ausführungsbeispiel; und
- Fig. 5: eine schematische Perspektivansicht eines Gehäuses einer Flugzeugturbine.

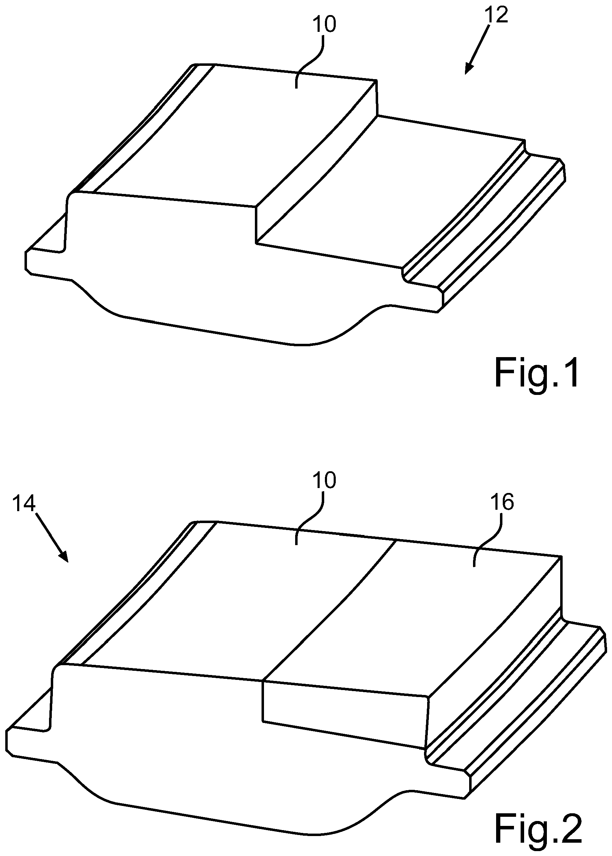

Fig. 1 zeigt eine schematische Perspektivansicht eines Trägerteilgrundkörpers 10 aus einem ersten Werkstoff. Bei dem ersten Werkstoff handelt es sich im gezeigten Ausführungsbeispiel um eine hochtemperaturfeste Titanlegierung. Man erkennt, dass der halbzeugartige Trägerteilgrundkörper 10 eine Aussparung 12 aufweist. Zur Herstellung des in Fig. 2 schematisch dargestellten Trägerteils 14 wird der Trägerteilgrundkörper 10 im Bereich seiner Aussparung 12 mit einem abreibfähigeren zweiten Werkstoff überdeckt, wodurch ein formschlüssig mit dem Trägerteilgrundkörper 10 verbundener Körper 16 gebildet wird. Der zweite Werkstoff besteht im gezeigten Ausführungsbeispiel aus einem keramischen Material und wird mit Hilfe eines Beschichtungsverfahrens auf den Trägerteilgrundkörper 10 aufgebracht.

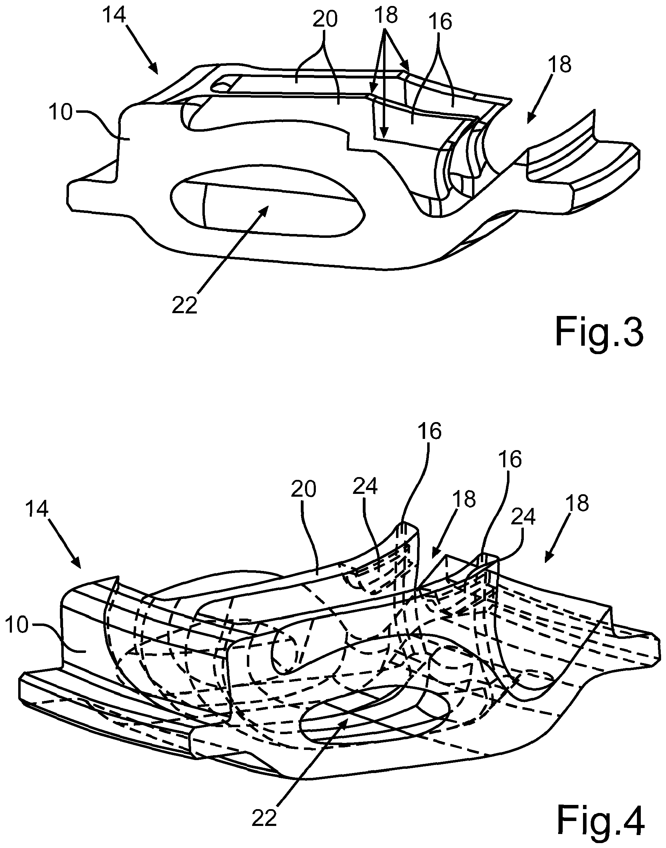

Fig. 3 zeigt eine schematische Perspektivansicht des in Fig. 2 gezeigten Trägerteils 14, in welches mittels eines Trennverfahrens Vertiefungen 18 eingebracht sind, um eine gewünschte Außenkontur auszubilden. Die Vertiefungen 18 sind über den Innenumfang des Trägerteils 14 verteilt und durch Erhebungen 20 voneinander abgetrennt. Die Erhebungen 20, die auch als CT-Zähne bezeichnet werden, bestehen aus dem ersten Werkstoff und sind an ihren jeweiligen Endbereichen mit durch das Trennverfahren nunmehr vereinzelten Körpern 16 aus dem abreibfähigeren zweiten Werkstoff überdeckt. Man erkennt weiterhin, dass das Trägerteil 14 zusätzlich seitliche Vertiefungen 22 aufweist, welche grundsätzlich optional sind und der Gewichtsreduktion sowie der Ausbildung eines innen liegenden Stütz- und Tragebereichs dienen.

In Fig. 4 ist ein Drahtgittermodell des Trägerteils 14 gemäß einem weiteren Ausführungsbeispiel abgebildet. Die Außenkontur des Trägerteils 14 entspricht dabei im Prinzip derjenigen des in Fig. 3 gezeigten Trägerteils 14. Im Unterschied zum vorhergehenden Ausführungsbeispiel weist das Trägerteil 14 im Endbereich seiner Erhebungen 20 jeweilige Stützwände 24 auf, auf welchen jeweils ein Körper 16 aus dem abreibfähigeren zweiten Werkstoff so aufgebracht ist, dass er die Stützwände 24 vollständig überdeckt. Mit anderen Worten werden zunächst ein Trägerteilgrundkörper 10 aus dem ersten Werkstoff sowie eine entsprechende Anzahl an Körpern 16 aus dem zweiten Werkstoff hergestellt, wonach die Körper 16 als eine Art Kappe oder Krone auf die Stützwände 24 der Erhebungen 20 aufgesteckt und in der Art einer Nut-Feder-Verbindung form- und/oder stoffschlüssig mit dem Trägerteilgrundkörper 10 verbunden werden. Die Körper 16 ergänzen dabei die Kontur des Trägerteilgrundkörpers 10 zur gewünschten Außenkontur und liegen bündig am Trägerteilgrundkörper 10 bzw. am ersten Werkstoff an. Die Stützwände 24 können durch Fräsen eines entsprechend geformten Trägerteilgrundkörpers 10 ausgebildet werden. Alternativ kann der Trägerteilgrundkörper 10 des in Fig. 4 gezeigten Trägerteils 14 durch ein Urformverfahren ausgebildet und anschließend in der vorstehend beschriebenen Weise mit den Körpern 16 aus dem abreibfähigeren zweiten Werkstoff versehen werden.

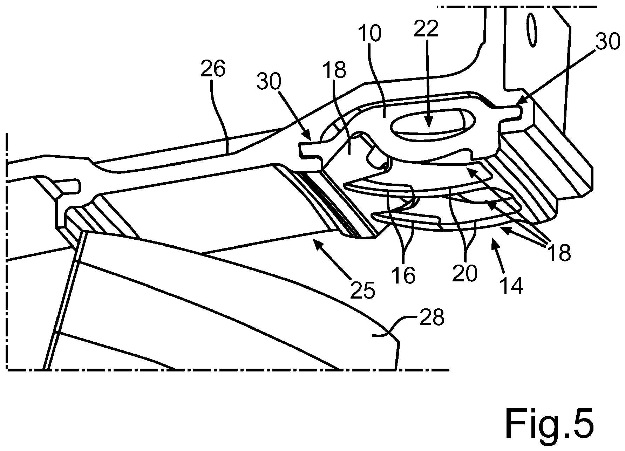

Fig. 5 zeigt eine schematische Perspektivansicht eines Gehäuses 26 einer Flugzeugturbine (nicht dargestellt). Aus Gründen der Übersichtlichkeit ist dabei lediglich ein Segment des Gehäuses 26 abgebildet. Man erkennt den radial äußeren Endbereich einer Rotorschaufel 28 eines Rotors, welcher vom Gehäuse 26 in an sich bekannter Weise umgeben ist. Das Trägerteil 14, in welchem die zur Verbesserung eines Pumpgrenzbereichs der Flugzeugturbine dienenden Vertiefungen 18 und Erhebungen 20 ausgebildet sind, ist in entsprechende, an der Innenseite 25 des Gehäuses 26 ausgebildete Nuten 30 eingeschoben und hierdurch lösbar am Gehäuse 26 festgelegt. Die aus dem abreibfähigeren zweiten Werkstoff bestehenden Körper 16, welche die Erhebungen 20 des Trägerteils 14 teilweise überdecken, stellen die den Rotorschaufeln 28 am nächsten liegenden Bauteilstrukturen dar und werden daher im Fall eines Anstreifens geringfügig abgerieben, ohne dass die Rotorschaufeln 28 oder das restliche Gehäuse 26 bzw. das restliche Trägerteil 14 hierbei in Mitleidenschaft gezogen werden. Im Unterschied beispielsweise zu einem Einlaufbelag bilden die mit den Körpern 16 überdeckten Erhebungen 20 keinen durchgehenden Belag konstanter Dicke in Umfangsrichtung des Gehäuses 26, so dass beim Anstreifen einer Rotorschaufel 28 ein unterbrochener Abrieb von CT-Zahn zu CT-Zahn erfolgt.

Zur Reparatur kann das Trägerteil 14 vom Gehäuse abgenommen werden. Alternativ können die Körper 16 in der eingebauten Position beispielsweise durch ein Auftragsverfahren oder durch einen Austausch repariert oder ersetzt werden. Alternativ oder zusätzlich kann weiterhin vorgesehen sein, dass die Vertiefungen 18, Erhebungen 20 und die aus dem zweiten Werkstoff gefertigten Körper 16 unmittelbar am Gehäuse 26 ausgebildet sind, so dass auf ein separates Trägerteil 14 verzichtet werden kann.

## Patentansprüche

1. Gehäuse (26) für einen beschaufelten Rotor einer Strömungsmaschine, insbesondere für ein Flugzeugtriebwerk, wobei das Gehäuse (26) zur Verbesserung eines Pumpgrenzbereichs der Strömungsmaschine an seiner dem Rotor zuzuwendenden Innenseite eine strukturierte Oberfläche mit einer Mehrzahl von über den Innenumfang des Gehäuses (26) angeordneten Vertiefungen (18) aufweist, wobei die Vertiefungen (18) durch Erhebungen (20) voneinander abgetrennt sind, und wobei die Erhebungen (20) aus einem ersten Werkstoff bestehen und zumindest teilweise mit einem abreibfähigeren zweiten Werkstoff überdeckt sind, **dadurch gekennzeichnet, dass** der erste Werkstoff Titan und/oder eine Titanlegierung ist und die Erhebungen (20) in Umfangsrichtung des Gehäuses (26) derart angeordnet sind, dass bei einem Anstreifen einer Rotorschaufel (28) ein unterbrochener Abrieb von Erhebung (20) zu Erhebung (20) erfolgt.

2. Gehäuse (26) nach Anspruch 1, **dadurch gekennzeichnet, dass** die Erhebungen (20) zumindest im Bereich ihres geringsten Abstands zu Schaufelspitzen des Rotors mit dem zweiten Werkstoff überdeckt sind.

3. Gehäuse (26) nach Anspruch 1 oder 2, **dadurch gekennzeichnet, dass** die Vertiefungen (18) und Erhebungen (20) in einem Trägerteil (14) ausgebildet sind, welches am Gehäuse (26) festgelegt ist.

4. Gehäuse (26) nach einem der Ansprüche 1 bis 3, **dadurch gekennzeichnet, dass** die Erhebungen (20) im Übergangsbereich zwischen dem ersten Werkstoff und dem zweiten Werkstoff einen stetigen Außenkonturverlauf aufweisen.

5. Gehäuse (26) nach einem der Ansprüche 1 bis 4, **dadurch gekennzeichnet, dass** der zweite Werkstoff ein Metall und/oder eine Metalllegierung und/oder ein keramisches Material ist.

6. Gehäuse (26) nach einem der Ansprüche 1 bis 5, **dadurch gekennzeichnet, dass** der zweite Werkstoff mit Hilfe eines Beschichtungsverfahrens, insbesondere durch thermisches Spritzen, Pulverbeschichten, Auftraglöten, Plasma-Pulver-Auftragschweißen, Auftragschweißen, Wirbelsintern und/oder Sputtern, auf die jeweilige Erhebung (20) aufgebracht ist und/oder dass Körper (16) aus dem zweiten Werkstoff mit jeweiligen Erhebungen (20) verbunden sind.

7. Gehäuse (26) nach einem der Ansprüche 1 bis 6, **dadurch gekennzeichnet, dass** wenigstens eine Erhebung (20) eine Stützwand (24) aufweist, auf welcher der zweite Werkstoff derart aufgebracht ist, dass er wenigstens drei Seiten der Stützwand (24) überdeckt.

8. Strömungsmaschine, insbesondere Flugzeugturbine, mit einem Gehäuse (26), welches einen beschaufelten Rotor umgibt, wobei das Gehäuse (26) zur Verbesserung eines Pumpgrenzbereichs der Strömungsmaschine an seiner dem Rotor zuzuwendenden Innenseite eine strukturierte Oberfläche mit einer Mehrzahl von über den Innenumfang der Innenwand angeordneten Vertiefungen (18) aufweist, **dadurch gekennzeichnet, dass** das Gehäuse (26) gemäß einem der Patentansprüche 1 bis 7 ausgebildet ist.

## Claims

1. A housing (26) for a bladed rotor of a turbomachine, particularly for an aircraft engine, wherein the housing (26), in order to improve a surge margin of the turbomachine, has on its inner side to be turned towards the rotor a structured surface with a plurality of depressions (18) arranged over the inner periphery of the housing (26), with the depressions (18) being separated from one another by raised areas (20), and with the raised areas (20) being made of a first material and covered at least partially with a more abradable second material, **characterized in that** the first material is titanium and/or a titanium alloy and the raised areas (20) towards the perimeter of the housing (26) are arranged such that, when a rotor blade (28) is rubbed, the wear from raised area (20) to raised area (20) is interrupted.

2. The housing (26) as set forth in claim 1, **characterized in that** the raised areas (20) are covered with the second material at least in the area of their shortest distance to blade tips of the rotor.

3. The housing (26) as set forth in claim 1 or 2, **characterized in that** the depressions (18) and raised areas (20) are embodied in a carrier part (14) that is fixed to the housing (26).

4. The housing (26) as set forth in any ane of claims 1 to 3, **characterized in that** the raised areas (20) in the transitional portion between the first material and the second material have a constant outer contour profile.

5. The housing (26) as set forth in any one of claims 1 to 4, **characterized in that** the second material is a metal and/or a metal alloy and/or a ceramic material.

6. The housing (26) as set forth in any one of claims 1 to 5, **characterized in that** the second material is applied to the respective raised area (20) with the aid of a coating method, particularly through thermal spraying, powder coating, solder coating, plasma-powder deposition welding, deposition welding, whirl sintering, and/or sputtering, and/or that bodies (16) made of the second material are joined with respective raised areas (20).

7. The housing (26) as set forth in any one of claims 1 to 6, **characterized in that** at least one raised area (20) has a supporting wall (24) onto which the second material is applied such that it covers at least three sides of the supporting wall (24).

8. A turbomachine, particularly aircraft turbine, with a housing (26) that encloses a bladed rotor, wherein the housing (26), in order to improve the surge margin of the turbomachine, has on its inner side to be turned towards the rotor a structured surface with a plurality of depressions (18) arranged over the inner periphery of the inner wall, **characterized in that** the housing (26) is embodied as set forth in any one of claims 1 to 7.

## Revendications

1. Boîtier (26) pour un rotor à aubage d'une turbomachine, en particulier pour un moteur d'avion, ledit boîtier (26) présente, pour améliorer une plage limite de pompage de la turbomachine, sur sa face intérieure devant être tournée vers le rotor, une surface structurée pourvue d'une pluralité de cavités (18) disposées sur le pourtour intérieur du boîtier (26), lesdites cavités (18) étant séparées les unes des autres par des bossages (20), et lesdits bossages (20) étant composés d'un premier matériau et étant recouverts au moins en partie par un second matériau plus résistant à l'usure abrasive, **caractérisé en ce que** le premier matériau est du titane et/ou un alliage de titane et que les bossages (20) sont disposés en direction périphérique du boitier (26) de sorte qu'en cas de raclage d'une aube de rotor (28) s'effectue une usure abrasive discontinue de bossage (20) à bossage (20).

2. Boîtier (26) selon la revendication 1, **caractérisé en ce que** les bossages (20) sont recouverts au moins dans la zone de leur plus petit écart par rapport aux pointes d'aube du rotor par le second matériau.

3. Boîtier (26) selon la revendication 1 ou 2, **caractérisé en ce que** les cavités (18) et les bossages (20) sont conçues dans un élément porteur (14), lequel est fixé sur le boîtier (26).

4. Boîtier (26) selon l'une des revendications 1 à 3, **caractérisé en ce que** les bossages (20) présentent dans la zone de transition entre le premier matériau et le second matériau un parcours de contour extérieur continu.

5. Boîtier (26) selon l'une des revendications 1 à 4, **caractérisé en ce que** le second matériau est un métal et/ou un alliage de métal et/ou un matériau céramique.

6. Boîtier (26) selon l'une des revendications 1 à 5, **caractérisé en ce que** le second matériau est appliqué à l'aide d'un procédé de revêtement, en particulier par projection thermique, revêtement de poudre, revêtement par brasage, rechargement PTA, revêtement par soudage, bain fluidisé et/ou pulvérisation sur le bossage respectif (20) et/ou **en ce que** des corps (16) du second matériau sont reliés aux bossages (20) respectifs.

7. Boîtier (26) selon l'une des revendications 1 à 6, **caractérisé en ce qu'**au moins un bossage (20) présente une paroi de soutien (24), sur laquelle le second matériau est appliqué de façon à ce qu'il recouvre au moins trois faces de la paroi de soutien (24),

8. Turbomachine, en particulier turbine d'avion, dotée d'un boîtier (26), lequel entoure un rotor à aubage, ledit boîtier (26) présentant, pour améliorer une plage limite de pompage de la turbomachine, sur sa face intérieure devant être tournée vers le rotor, une surface structurée pourvue d'une pluralité de cavités (18) disposées sur le pourtour intérieure de la paroi interne, **caractérisé en ce que** le boîtier (26) est conçu conformément à l'une des revendications 1 à 7.
